# EUROPEAN PATENT SPECIFICATION

(11) **EP 0 352 281 B1**
(45) Date of publication and mention of the grant of the patent: **17.03.1993**
(21) Application number: 88902982.3
(22) Date of filing: 25.03.1988
(51) Int. Cl.: B65G 15/54

(54) **CONVEYOR BELT**
FÖRDERBAND
BANDE DE TRANSPORT

(30) Priority: 27.03.1987 SE 8701290
(43) Date of publication of application: 31.01.1990
(73) Proprietor: SCANDIAFELT AB, S-640 10 Högsjö (SE)
(72) Inventor: ALMHEM, Rolf, S-640 10 Högsjö (SE)
(74) Representative: Billberg, Hans
(86) International application number: SE8800150
(87) International publication number: WO8807488

(56) References cited:
- DE-A- 900 548
- FR-A- 2 198 876
- SE-A- 203 755
- US-A- 2 505 354
- Patent Abstracts of Japan, Vol. 7, No 1, M183, abstract of JP 57-160809, publ. 1982-10-04

## Description

This invention relates to a conveyor belt, which is endless and runs over support rolls and turning rolls for the transportation of relatively light objects and which consists of a woven fabric made of longitudinal filaments and cross-wise monofilaments.

Conveyor belts of this kind (see e.g., JP-A-57160809) are used in the food industry and in the wood working industry and are intended for light transportation of objects and is made of material, which consists of thin, woven fabrics having longitudinal filaments and crosswise monofilaments having circular cross-section. The material of the yarns is often polyester but may be of other fiber forming polymers.

According to the invention the conveyor belt of now described kind can be improved and offer better runnability and wear resistance by that at least the crosswise filaments consist of yarns having a flat, oval or a cross section of similar shape where the ratio between width and height of the cross-section is at least 1,5.

The space between crossing yarns is filled up effectively and the stiffening crosswise yarns can be given a larger cross-section without that the dimensions of the belt otherwise are changed. The larger cross-section area and volume of the crosswise filaments will increase the shearing resistance of the belt, which means that the belt will be easier to run and stear. A further advantage is that the crosswise yarns will offer a larger contact surface against the support, i.e. against rolls, sliding planes, etc., which will reduce the wear.

Two embodiments of the invention will be described in the following with reference to the enclosed drawings.

Fig. 1 discloses a part of a longitudinal section through a conveyor belt of a known type.

Fig. 2 discloses a similar longitudinal section of a conveyor belt according to the invention.

Fig. 5 discloses a schematic perspective view of a second embodiment of the conveyor belt according to the invention.

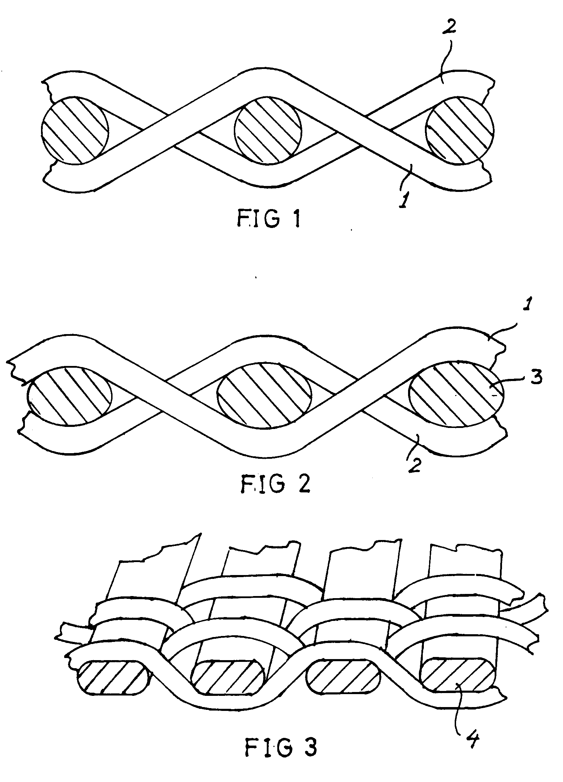

The fabric of which the conveyor belt is made of, consists of longitudinal filaments 1 and 2 and the known conveyor belts have crosswise yarns of circular cross-section according to what is shown in Fig. 1. Multifilament yarns are usually used for the longitudinal yarns. According to the fabric shown in Fig. 2 the crosswise yarns of the conveyor belt according to the invention consist of flat oval yarns 3 where the ratio between the width and height of the cross-section is at least 1,5. Fig. 3 shows a cross-section form for the crosswise yarns 4, which are almost of rectangular form. The longest side of the cross-section is placed in the running direction of the conveyor belt.

It may be desirable to increase the lengthwise stiffness of certain conveyor belts and also increase the bearing resistance of the belt against the supporting wheels. It is therefore preferable to use monofilaments also for the longitudinal yarns and a further advantage may be if also these yarns are flattened or have an oval cross-section.

The fabric is preferably impregnated or coated e.g. with polyacrylic, polyuretane or silicon resins. The coating procedure will be performed easier when exchanging the circular, crosswise filaments with flatened monofilaments by that the space between crossing yarns will be smaller, i.e. the continuously open pores will decrease in size. In practice the fabric is manufactured endless by endless weaving or by splicing the ends together. An endless fabric can also be made by mechanical joints of different kinds.

## Claims

1. Conveyor belt, which is endless and runs over support rolls and turning rolls for the transportation of relatively light objects and which consists of a woven fabric having longitudinal filament yarns (1, 2) and crosswise monofilament yarns, **characterized** in that at least the crosswise monofilaments (3, 4) consist of yarns having a flat, oval or a cross section of similar shape, where the ratio between width and height of the cross-section of the yarns is at least 1,5.

2. Conveyor belt according to claim 1, **characterized** in that the longitudinal yarns (1, 2) consist of flatened monofilaments.

3. Conveyor belt according to claims 1 and 2, **characterized** in that the fabric is impregnated and/or coated by any polymers such as polyacrylic, polyetene or silicon resins.

4. Conveyor belt according to any of the preceding claims, **characterized** in that the fabric is manufactured endless by weaving, splicing, gluing or by mechanical joints.

## Patentansprüche

1. Förderband, das endlos ist und über Tragrollen und Umkehrrollen zum Befördern relativ leichter Gegenstände läuft und aus einem Gewebe mit in Längsrichtung verlaufenden Filamentgarnen (1, 2) und in Querrichtung verlaufenden Monofilamentgarnen besteht, **dadurch gekennzeichnet**, daß wenigstens die in Querrichtung verlaufenden Monofilamente (3, 4) aus Garnen mit einer flachen, ovalen oder ähnlichen Querschnittsform bestehen, wobei das Verhältnis zwischen Breite und Höhe des Querschnitts der Garne wenigstens 1,5 beträgt.

2. Förderband nach Anspruch 1, **dadurch gekennzeichnet**, daß die Längsgarne (1, 2) aus abgeflachten Monofilamenten bestehen.

3. Förderband nach den Ansprüchen 1 und 2, **dadurch gekennzeichnet**, daß das Gewebe imprägniert und/oder mit einem Polymer beschichtet ist, z.B. einem Polyacryl-, einem Polyurethan- oder einem Siliconharz.

4. Förderband nach einem der vorstehenden Ansprüche, **dadurch gekennzeichnet**, daß das Gewebe endlos hergestellt ist durch Weben, Spleißen, Kleben oder mechanische Verbindungen.

## Revendications

1. Courroie transporteuse sans fin et passant sur des rouleaux de support et des rouleaux de renvoi pour le transport d'objets relativement légers et constituée d'un tissu tissé ayant des fils à filaments longitudinaux (1, 2) et des fils à monofilaments transversaux, caractérisée on ce qu'au moins les monofilaments transversaux (3, 4) sont constitués de fils ayant une section transversale plate, ovale ou de forme analogue dans laquelle le rapport entre la largeur et la hauteur de la section transversale des fils est au moins égal à 1,5.

2. Courroie transporteuse selon la revendication 1, caractérisée en ce que les fils longitudinaux (1, 2) sont constitués de monofilaments aplatis.

3. Courroie transporteuse selon les revendications 1 et 2, caractérisée en ce que le tissu est imprégné et/ou revêtu de polymères tels que résine polyacrylique, polyuréthane ou silicone.

4. Courroie transporteuse selon l'une quelconque des revendications précédentes, caractérisée en ce que le tissu est fabriqué sans fin par tissage, épissurage, collage ou assemblage mécanique.
